# EUROPÄISCHE PATENTSCHRIFT

(11) **EP 2 870 102 B1**
(45) Veröffentlichungstag und Bekanntmachung des Hinweises auf die Patenterteilung: **27.12.2017**
(21) Anmeldenummer: 13727184.7
(22) Anmeldetag: 06.06.2013
(51) Int. Cl.: B66F 7/04, B60B 29/00, B60B 30/02

(54) **HEBEVORRICHTUNG UND VERFAHREN ZUR MONTAGE UND DEMONTAGE EINES RADES MIT EINER SOLCHEN HEBEVORRICHTUNG**
LIFTING DEVICE AND METHOD FOR INSTALLING AND UNINSTALLING A WHEEL USING SUCH A LIFTING DEVICE
DISPOSITIF DE LEVAGE ET PROCÉDÉ DE MONTAGE ET DE DÉMONTAGE D'UNE ROUE AU MOYEN D'UN TEL DISPOSITIF DE LEVAGE

(30) Priorität: 06.07.2012 DE 102012106073
(43) Veröffentlichungstag der Anmeldung: 13.05.2015
(73) Patentinhaber: Finkbeiner, Gerhard, 72250 Freudenstadt (DE)
(72) Erfinder: Finkbeiner, Gerhard, 72250 Freudenstadt (DE)
(74) Vertreter: Mammel und Maser
(86) Internationale Anmeldenummer: PCT/EP2013/061714
(87) Internationale Veröffentlichungsnummer: WO 2014/005790

(56) Entgegenhaltungen:
- WO-A1-95/25062
- AU-A4- 2008 101 096
- CN-Y- 2 885 817
- DE-A1- 2 659 710
- DE-C1- 10 225 080
- DE-U1-202006 013 854
- DE-U1-202007 014 662
- FR-A1- 2 781 779
- JP-A- 2000 247 590
- US-A1- 2007 214 686

## Beschreibung

Die Erfindung betrifft eine mobile Hebevorrichtung zum Heben von Lasten, Fahrzeugen oder dergleichen sowie ein Verfahren zur Montage und Demontage eines Rades mit einer solchen Hebevorrichtung.

Aus der CN 2 885 817 Y ist eine Hebevorrichtung zum Heben von Lasten bekannt, welche ein mobiles Grundgestell umfasst. Dieses Grundgestell umfasst einen ersten und einen zweiten Schenkel mit jeweils einem Abstützpunkt, die parallel zueinander ausgerichtet sind, und zwischen denen sich eine Brücke erstreckt. Auf dieser Brücke ist eine Hubsäule angeordnet, entlang der ein Träger in der Höhe verfahrbar ist, um ein Lastaufnahmemittel auf und ab zu bewegen. Das Lastaufnahmemittel kann zwischen dem ersten und zweiten Schenkel abgesenkt werden. Die Hubsäule ist außermittig zum Grundgestell angeordnet.

Aus der FR 2 781 779 A1 geht eine Hebevorrichtung mit einem U-förmigen Grundgestell hervor. Mittig am U-förmigen Grundgestell ist eine Hubsäule angeordnet, welche einen Träger aufnimmt, durch welchen das Lastaufnahmemittel entlang der Hubsäule auf und ab bewegbar ist. Die Hubsäule ist quadratisch ausgebildet und um 45° zum dritten Schenkel des Grundgestells gedreht, der rechtwinklig zwischen den zwei parallel ausgerichteten ersten und zweiten Schenkeln angeordnet ist.

Aus der DE 26 59 710 A1 ist ein Hebegerät bekannt, welches zur Radmontage eingesetzt wird. Dieses Hebegerät weist ein U-förmiges Grundgestell auf, auf welchem mittig eine Hubsäule angeordnet ist. Diese Hubsäule nimmt ein auf und ab bewegbares Lastaufnahmemittel auf. Das Lastaufnahmemittel umfasst Greifarme an einem Längsträger der Lastaufnahme, die vor dem Positionieren eines Rades manuell auf die Größe des zu handhabenden Rades einstellbar sind.

Aus der WO 2010/112200 A1 ist eine mobile Hebevorrichtung bekannt, die auch als Einsäulenbühne bezeichnet wird. Eine solche Hebevorrichtung umfasst ein mobiles Grundgestell mit einer daran angeordneten Hubsäule, in welcher ein Träger mit einem darauf angeordneten Lastaufnahmemittel auf und ab bewegbar geführt wird. Zum Heben und Senken ist eine Hubeinheit vorgesehen, die zumindest eine Steuerung und einen Hydraulikzylinder umfasst, um das Lastaufnahmemittel auf und ab zu bewegen. Zur Gewährleistung der Stabilität im mobilen Einsatz weist das Grundgestell drei Abstützpunkte außerhalb des Lastaufnahmebereichs auf.

Eine solche Anordnung hat sich im Einsatz bewährt. Bei einem mittels der Vorrichtung angehobenen Fahrzeug ist jedoch ein Radwechsel erschwert, da die Fahrzeugräder, insbesondere die Radmuttern, nicht oder nur schwer zugänglich sind. Darüber hinaus sind Wartungsarbeiten am Bremssystem im angehobenen Zustand nicht durchführbar, da auch die Befestigungspunkte der Fahrzeugbremsen durch die Hubsäulenführung verdeckt sind. Für Arbeiten an den Fahrzeugrädern oder-bremsen sind daher zusätzliche Arbeitsgänge erforderlich, die zusätzlich den Einsatz eines Radmontagewagens oder Radhubwagens bedingen. Derartige Vorrichtungen werden dabei typischerweise mittels einer Handkurbel oder hydraulischen Handpumpe und nicht motorisch angetrieben und erfordern einen entsprechend intensiven Krafteinsatz des Werkstattpersonals. Um den direkten Zugang zu den Radmuttern zu ermöglichen, kann die Hubsäule solcher Radmontagewagen seitlich versetzt angeordnet sein. Diese Radmontagewagen können ausschließlich für einen Radwechsel eingesetzt werden.

Der Erfindung liegt die Aufgabe zugrunde, eine mobile Hebevorrichtung mit hoher Steifigkeit zu schaffen sowie ein Verfahren zur Montage und Demontage von Rädern vorzuschlagen, wodurch sowohl Arbeiten an einer Karosserie oder einem Antriebsstrang als auch für die Montage und Demontage von Rädern oder Arbeiten am Bremssystem eines Fahrzeugs ermöglicht und somit die Gesamtzahl der erforderlichen Arbeitsschritte wie auch das Einsatzerfordernis zusätzlichen Arbeitsgeräts verringert sind.

Diese Aufgabe wird erfindungsgemäß durch eine Hebevorrichtung gemäß Anspruch 1 und ein Verfahren gemäß Anspruch 10 gelöst. Durch diese Anordnung und Ausgestaltung der Hebevorrichtung kann diese eine Doppelfunktion ermöglichen. Zum einen dient die Hebevorrichtung als eine mobile Einsäulen-Hebebühne, welche mit weiteren Einsäulen-Hebebühnen zum Heben und Senken von kompletten Fahrzeugen einsetzbar ist und zum anderen eine einfache Radmontage ermöglicht, wodurch die zusätzliche Anschaffung eines Radmontagewagens sowie der Einsatz des Radmontagewagens entbehrlich ist. Durch diese asymmetrische Hubsäule sind die Radmuttern sowie die Befestigungspunkte an der Radnabe frei zugänglich. Auf diese Weise wird eine Radmontage oder Raddemontage ohne den zusätzlichen Einsatz eines Radmontagewagens und die damit verbundenen zusätzlichen Arbeitsschritte durchführbar. Gleichzeitig entfällt somit der für das zusätzliche Heranfahren und wieder Aufräumen des Radmontagewagens erforderliche Zeitaufwand als auch der für den manuellen Antrieb eines solchen Radmontagewagens erforderliche Krafteinsatz des Werkstattpersonals.

Bei einer Lastaufnahme der Hebevorrichtung kann durch die Hubsäule und den Träger eine Kraftresultierende gebildet sein, welche senkrecht zur Führung der Hubsäule und des Trägers wirkt sowie in Richtung des Lastaufnahmebereichs weist und innerhalb diesem liegt. Dadurch kann eine besonders hohe Steifigkeit der Hebevorrichtung erzielt werden, wobei die Vorteile bei der asymmetrischen Anordnung beibehalten werden.

Bei einer Lastaufnahme kann durch die Hubsäule und den Träger eine Kraftresultierende F gebildet sein, welche senkrecht zu zumindest einer Führungsfläche oder zumindest einem Führungselement der Führung der Hubsäule und des Trägers wirkt, wobei vorzugsweise die Kraftresultierende F in Richtung der Orientierungsrichtung der maximalen Lastaufnahme der Hubsäule weist. Durch diese Anordnung kann eine kompakte Hebevorrichtung mit einer hohen Lastaufnahme ausgebildet werden.

Es ist vorgesehen, dass der Grundgestell zumindest einen ersten Schenkel mit einem ersten Abstützpunkt und einen zweiten Schenkel mit einem zweiten Abstützpunkt aufweist, wobei der erste Schenkel und der zweite Schenkel im Wesentlichen parallel ausgerichtet und mit zumindest einem Schenkel im Wesentlichen U-förmig verbunden sind. Die Abstützpunkte sind bevorzugt durch Laufrollen ausgebildet. Durch diese geometrische Ausgestaltung des Grundgestells wird die zum Anheben großer Lasten erforderliche Kippsicherheit der Hebevorrichtung gewährleistet.

Als eine weitere nicht erfindungsgemäßen Ausführungsform des Grundgestells kann die U-förmige Verbindung durch einen geradlinigen Schenkel erfolgen, so dass die drei Schenkel rechtwinklig zueinander angeordnet sind. Die Hubsäule selbst kann verdreht auf den Verbindungsschenkel und asymmetrisch angeordnet sein. Als eine weitere nicht erfindungsgemäßen Ausführungsform kann der dritte Schenkel eine Verbindung zwischen dem ersten und zweiten Schenkel darstellen, wobei diese beiden jeweils in einem stumpfen Winkel zum dritten Schenkel angeordnet sind. Eine weitere nicht erfindungsgemäßen alternative Ausführungsform kann vorsehen, dass der erste und zweite Schenkel parallel ausgerichtet, jedoch unterschiedlich lang sind, so dass der dritte Schenkel eine Verbindung zwischen dem kürzeren und längeren Schenkel bildet, wodurch der dritte Schenkel zum einen in einem spitzen Winkel zum längeren und zum anderen über einen stumpfen Winkel zum kürzeren Schenkel befestigt ist. Die Hubsäule kann wiederum außermittig gedreht am dritten Schenkel angeordnet sein.

Die im Wesentlichen U-förmige Verbindung der beiden parallelen Schenkel des Grundgestells ist durch mindestens zwei ungleichlange Schenkel gebildet, die in einem stumpfen Winkel zueinander angeordnet und vorzugsweise zumindest der dritte und vierte Schenkel zum ersten und zweiten Schenkel in einem stumpfen Winkel angeordnet sind. Dadurch ist der dritte und vierte Schenkel jeweils winklig zu einem durch das Lastaufnahmemittel bestimmten Lastaufnahmebereich angeordnet, so dass eine Hubsäule, die an dem dritten oder vierten Schenkel außermittig zum Grundgestell positioniert ist, eine Ausrichtung der Kraftresultierenden aufweist, die in den Lastaufnahmebereich weist beziehungsweise diesen kreuzt. Der Lastaufnahmebereich erstreckt sich bevorzugt als rechteckförmige oder quadratische Fläche zwischen den parallelen Schenkeln des Grundgestells oder innerhalb des Lastaufnahmemittels.

Die Hubsäule ist auf dem kürzeren Schenkel angeordnet. Auf diese Weise wird durch einen vergleichsweise einfachen konstruktiven Aufbau die erfindungsgemäß versetzte und verdrehte Positionierung der Hubsäule und des Trägers erreicht und vorzugsweise am kürzeren Schenkel unmittelbar an der Hubsäule ein dritter Abstützpunkt außerhalb des Lastaufnahmebereichs gebildet.

Des Weiteren ist die Hubsäule bevorzugt an dem kürzeren Schenkel angeordnet und an dem längeren Hubschenkel angrenzend positioniert. Dadurch ist einerseits eine außermittige Anordnung der Hubsäule ermöglicht, wobei gleichzeitig durch das Verhältnis der ungleich langen Schenkel eine Ausrichtung der Hubsäule bezüglich deren Führungselement zum Lastaufnahmebereich erfolgt, da vorzugsweise ein Führungselement der Hubsäule parallel zu einem zum Lastaufnahmebereich weisenden Wandabschnitt des kürzeren Schenkels ausgerichtet ist. Dadurch kann eine geometrisch einfache Konstruktion mit einer hohen Steifigkeit erzielt werden.

Nach einer bevorzugten Ausgestaltung der Erfindung ist das Lastaufnahmemittel als Radgreifelement mit einem ersten und zweiten Gabelarm ausgebildet, die parallel zum ersten und zweiten Schenkel ausgerichtet sind. Dadurch kann die Hebevorrichtung zum Anheben eines Fahrzeugs an einem Reifen desselben angreifen. Zwischen den Gabelarmen und dem Träger ist ein Halteabschnitt ausgebildet, der die winklige Anordnung des Trägers beziehungsweise der Hubsäule ausgleicht, so dass die Gabelarme parallel zu den Schenkeln ausgerichtet sind. Dadurch ist das Lastaufnahmemittel trotz einer verdrehten Anordnung der Hubsäule zum Lastaufnahmebereich wiederum vollständig zwischen dem Grundgestell absenkbar, um diese sehr einfache Handhabung beizubehalten. Dies ist insbesondere bei der Montage des Rades an der Radnabe von Vorteil, damit die Lochrasterung der Felge mit der der Radnabe durch einfache Drehung des Rades deckungsgleich ausgerichtet werden kann.

Eine weitere bevorzugte Ausgestaltung der Erfindung sieht vor, dass das Lastaufnahmemittel zumindest abschnittsweise rollengelagerte oder gleitfähige Aufnahmeelemente an zumindest einem der beiden Gabelarme aufweist. Dadurch wird ein auf dem Lastaufnahmemittel stehendes Rad um seine Rotationsachse drehbar.

Gemäß einer vorteilhaften Ausführungsform ist dabei zumindest ein Gabelarm als Rolle oder Walze ausgeführt, damit ein durch das Lastaufnahmemittel aufgenommenes Rad gedreht werden kann.

Gemäß einer weiteren Ausgestaltung ist zumindest einer der Gabelarme relativ zum anderen Gabelarm verschiebbar angeordnet, so dass eine Einstellung des Lastaufnahmemittels auf unterschiedliche Radgrößen erfolgen kann. Durch ein Vergrößern oder Verringern des Abstands der Gabelarme kann ein auf dem Radgreifelement ruhendes Rad seitlich zur Hubrichtung feinpositioniert werden, ohne das Lastaufnahmemittel auf und ab zu bewegen. Auf diese Weise integriert die Hebevorrichtung Funktionen, die ihrem Einsatz zur Radmontage dienen. Alternativ kann vorgesehen sein, dass auch nur einer der beiden Gabelarme verschiebbar und der andere fest angeordnet ist. Dadurch kann ebenfalls eine Feinjustierung erfolgen.

Nach einer weiteren bevorzugten Ausgestaltung ist an der Hubsäule oder an dem Grundgestell eine Radhaltevorrichtung vorgesehen. Diese Radhaltevorrichtung ist bevorzugt oberhalb der Lastaufnahme positionierbar, so dass beim Einsatz der Hebevorrichtung als Radmontagewagen während einer Hebe- und Senkbewegung als auch während einer Verfahrbewegung ein sich auf dem Lastaufnahmemittel befindendes Rad in seiner stehenden Position gesichert gehalten werden kann.

Diese Radhaltevorrichtung weist bevorzugt einen U-förmigen Greiferabschnitt auf, um an dem Reifen des Rades anzugreifen. Dadurch kann durch ein einfaches Verdrehen des Greiferabschnitts ein Lösen und Angreifen an dem Rad ermöglicht sein. Insbesondere kann die Breite des Greifabschnitts als auch die Lage in Abhängigkeit der Reifengröße einstellbar sein.

Eine weitere bevorzugte Ausführungsform der Erfindung sieht vor, dass eine lenkbare Rolle dem Lastaufnahmebereich gegenüberliegend an der Hubsäule und dem Träger zugeordnet ist. Dadurch wird zum einen eine Kippsicherheit erzielt. Zum anderen bleibt die Handhabung der Hebeeinrichtung ähnlich wie bisher bei Hebevorrichtungen mit symmetrisch ausgerichteter Hubsäule zum Grundgestell erhalten.

Die der Erfindung zugrunde liegende Aufgabe wird des Weiteren durch ein Verfahren zur Montage und Demontage des Rades mit einer solchen Hebevorrichtung gelöst. Die Ausgestaltung dieser Hebevorrichtung ermöglicht, dass diese nicht nur als Teil eines Hebesystems zur Durchführung von Wartungs- und/oder Reparaturarbeiten des Fahrzeuges eingesetzt werden kann, bei denen die Demontage und eine anschließende Montage des Rades erforderlich ist, sondern dass diese Hebevorrichtung gleichzeitig auch zur Radmontage oder zum Radwechsel dient. Insbesondere durch die asymmetrische Anordnung der Hubsäule auf dem Grundgestell ist eine gute Zugänglichkeit zu den Radmuttern des zu wechselnden Rades gegeben. Durch diese Hebevorrichtung kann die zusätzliche Anschaffung eines Radmontagewagens entfallen, da diese Hebevorrichtung sowohl die Funktion einer Einsäulen-Hebevorrichtung als auch eines Radmontagewagens ausübt. Ein weiterer Stauraum für einen solchen Radmontagewagen wird nicht benötigt.

Bevorzugt ist vorgesehen, dass zur Feinjustierung des Rades für die Montage an der Radnabe zum Ausrichten eines Lochbildes der Felge auf das Lochbild der Radnabe ein Drehen des Rades auf der Lastaufnahme erfolgt und/oder ein Verschieben des einen Gabelarmes relativ zum weiteren Gabelarm durchgeführt wird und/oder ein Verfahren der Lastaufnahme bezüglich deren Höhe erfolgt. Dadurch kann die einmal in Position gebrachte Hebevorrichtung in dieser Position verbleiben, welche nach dem Anheben der Lastaufnahme unmittelbar auf dem Boden aufliegt, so dass eine schnelle Radmontage ermöglich ist. Durch das Drehen des Rades und/oder das Verschieben eines ersten oder zweiten Gabelarmes und/oder einer zusätzlichen Hebe- oder Senkbewegung der Lastaufnahme ist das Lochbild des zu wechselnden Rades in alle Richtungen der Montageebene positionierbar, um eine Überdeckung des Lochbildes der Felge zum Lochbild der Radnabe zu erzielen.

Die vorstehend beschriebene Hebevorrichtung, insbesondere die Einsäulen-Hebebühne, kann nicht nur als eine Komponente in einem aus beliebig vielen Hebevorrichtungen konfigurierbaren Hebesystem eingesetzt werden, sondern auch einzeln als Radmontagewagen. Solche Radmontagewagen werden zur Montage und Demontage von Rädern eingesetzt, um beispielsweise Reparaturarbeiten an den Bremsen der Karosserie oder dergleichen durchzuführen. Ebenso wird ein solcher Radmontagewagen zum Radwechsel eingesetzt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer erfindungsgemäßen Hebevorrichtung in einer Ruheposition,
Figur 2 eine schematische Ansicht von oben auf die Ausführungsform zu Figur 1,
Figur 3a eine schematische Ansicht von oben auf ein Grundgestell der Ausführungsform zu Figur 1 mit einer Schnittdarstellung der Hubsäule,
Figuren 3b bis 3e schematische Ansichten von nicht erfindungsgemäßen Ausführungsformen,
Figur 4 eine vergrößerte Ansicht von der Seite auf die Ausführungsform zu Figur 1 mit einem von dem Lastaufnahmemittel aufgenommenen Rad,
Figur 5 eine perspektivische Ansicht einer alternativen Ausführungsform zu Figur 1,
Figur 6 eine perspektivische Ansicht einer Viersäulen-Hebeeinrichtung mit den Hebevorrichtungen in einer oberen Hubendlage,
Figur 7 eine perspektivische Ansicht der Ausführungsform zu Figur 6 während der Durchführung eines Radwechsels und
Figur 8 eine vergrößerte Ansicht der Hebevorrichtung gemäß Figur 7 in einer oberen Hubendlage während einer Feinjustierung eines zu montierenden Rades.

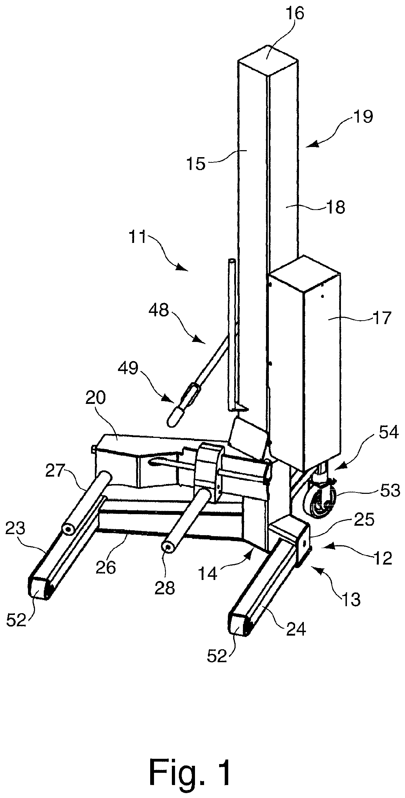

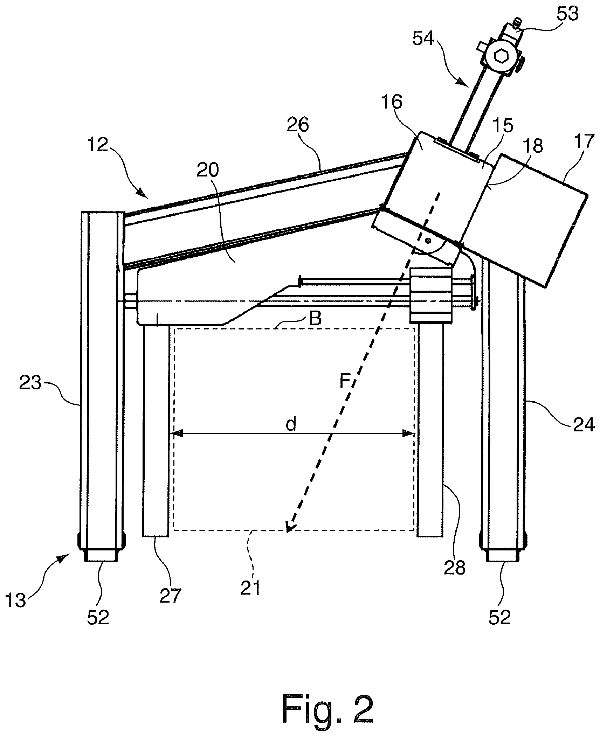

In Figur 1 ist eine perspektivische Ansicht einer erfindungsgemäßen Hebevorrichtung 11 dargestellt, welche sich zum mobilen Einsatz eignet. Die Figur 2 zeigt eine schematische Ansicht auf die Hebevorrichtung 11 gemäß Figur 1. Solche Hebevorrichtungen 11 werden auch als Einsäulen-Hebevorrichtungen bezeichnet. Die Hebevorrichtung 11 weist ein mobiles Grundgestell 12 auf, welches vorzugsweise ein Fahrwerk oder Lenkfahrwerk 13 umfasst. Am Grundgestell 12 ist eine Hubsäule 14 vorgesehen. An der Hubsäule 14 ist ein auf und ab bewegbarer Träger 15 vorgesehen, der bei dieser Ausführungsform als ein an seiner unteren Stirnseite offenes quadratisches oder rechteckiges Rohr oder Hülse ausgebildet ist, die in der dargestellten Ruheposition vorzugsweise die Hubsäule 14 im Wesentlichen umgibt. Diese Ausführungsform ermöglicht, dass die Geometrie der Hubsäule 14 ebenso als rohr- oder hülsenförmiges Profil oder auch als geschlossenes Profil ausgebildet sein kann, wodurch eine hohe Steifigkeit der Hebevorrichtung 11 gegeben ist. Dadurch können sowohl für die Hubsäule 14 als auch für den Träger 15 geschlossene Querschnitte geschaffen werden, die eine hohe Kraftaufnahme ermöglichen. Des Weiteren weist die geschlossene Ausführungsform des Trägers 15 mit einem den Träger 15 nach oben abschließenden Deckel 16 den Vorteil auf, dass alle innenliegenden Bauelemente von außen nicht zugänglich und vor Nässe und/oder Schmutz geschützt sind. Die Ausgestaltung des Profils der Hubsäule 14 innerhalb des Trägers 15 ist nur beispielhaft. Eine solche Ausführungsform ist aus der WO 2010/112200 A1 bekannt, auf welche vollumfänglich Bezug genommen wird.

Am Träger 15 ist vorzugsweise eine Hubeinheit 17 vorgesehen, welche eine nicht näher dargestellte Steuerung sowie eine Antriebseinheit und vorzugsweise Akkumulatoren zum Antrieb der Antriebseinheit und der Steuerung umfasst. Die Antriebseinheit umfasst bei einer hydraulischen Ausführungsform ein Hydraulikaggregat und einen Hubzylinder. Bei einer mechanischen Ausführungsform der Antriebseinheit kann ein Spindelantrieb vorgesehen sein, der eine Spindel mit einem elektrischen Antriebsmotor umfasst. Ebenso können weitere elektrische, elektromechanische oder elektrohydraulische Antriebe für eine Steuerung einer Hebe- und Senkbewegung des Lastaufnahmemittels vorgesehen sein. Durch das Mitführen der Hubeinheit 17 am Träger 15 lässt sich der Aufbau sowie die dazugehörige Verkabelung und Verlegung von gegebenenfalls hydraulischen Leitungen vereinfachen. Bevorzugt ist die Hubeinheit 17 an einer Seitenwand 18 des Trägers 15 oder an einer Adapterplatte, die an der Seitenwand 15 anbringbar ist, befestigt. Alternativ kann die Hubeinheit 17 auch an einer Rückwand 19 des Trägers 15 angeordnet sein.

An dem Träger 15 ist ein Lastaufnahmemittel 20 angeordnet. Alternativ zu einer festen Anordnung des Lastaufnahmemittels 20 am Träger 15 kann eine Einhängeeinrichtung am Träger 15 vorgesehen sein, so dass verschiedene Lastaufnahmemittel 20 daran anbringbar sind. Dieses Lastaufnahmemittel 20 umfasst zwei Gabelarme 27, 28, die zueinander beabstandet sind. Diese Gabelarme 27, 28 sind bevorzugt als Walzen oder Rollen ausgebildet, die in ihrer Position um die eigene Achse drehbar gelagert sind. Dadurch kann ein darauf aufgebrachtes Rad - wie nachfolgend noch ausgeführt wird - auf dem Lastaufnahmemittel 20 aufliegen und um seine eigene Achse gedreht werden.

Im Ausführungsbeispiel umfasst das Lastaufnahmemittel 20 einen ersten Gabelarm 27, welcher ortsfest zum Träger 15 angeordnet ist und einen zweiten Gabelarm 28, der relativ zum ersten Gabelarm 27 verfahrbar ist. Dadurch kann ein Abstand d einstellbar sein. Die Veränderung des Abstandes d kann durch einen manuellen Antrieb oder durch einen elektrischen oder hydraulischen Antrieb erfolgen. Alternativ kann sowohl der erste als auch der zweite Gabelarm 27, 28 jeweils relativ zueinander verfahrbar an einem Querjoch des Lastaufnahmemittels 20 angeordnet sein.

Durch das Lastaufnahmemittel 20 wird ein Lastaufnahmebereich 21 gebildet. Insbesondere wird dieser Lastaufnahmebereich 21 durch die Länge des ersten und zweiten Gabelarmes 27, 28 als auch dessen Abstandes d bestimmt. Dadurch wird ein rechteckiger oder quadratischer Lastaufnahmebereich 21 ausgebildet. Eine Längsseite B des Lastaufnahmebereichs 21 weist zum Lastaufnahmemittel 20 beziehungsweise begrenzt den Lastaufnahmebereich 21 zum Lastaufnahmemittel 20. Innerhalb diesem Bereich kann die Last, wie beispielsweise das Rad oder die Räder, aufgenommen werden. Dieser Lastaufnahmebereich 21 liegt bevorzugt innerhalb einer Grundfläche, welche durch das Grundgestell 12 gebildet wird. Das Grundgestell 12 weist bevorzugt zwei parallel zueinander ausgerichtete Schenkel 23, 24 auf, die zumindest durch einen weiteren Schenkel 25, 26 im Abstand zueinander fixiert und positioniert sind. Dadurch wird ein U-förmiges Grundgestell 12 gebildet, wobei innerhalb des U-förmigen Grundgestells 12 der Lastaufnahmebereich 21 liegt.

Das Lastaufnahmemittel 20 kann auch als Plattform ausgebildet sein oder eine Standfläche durch die Gabelarme 27, 28 aufnehmen, um eine Art Hubtisch mit einer Arbeitsplattform zu bilden. Des Weiteren kann am oberen Ende des Trägers 15 ein Lastarm angeordnet sein, um eine Kranfunktion zum Heben und Senken einer Last innerhalb des Lastaufnahmebereichs 21 ausüben zu können.

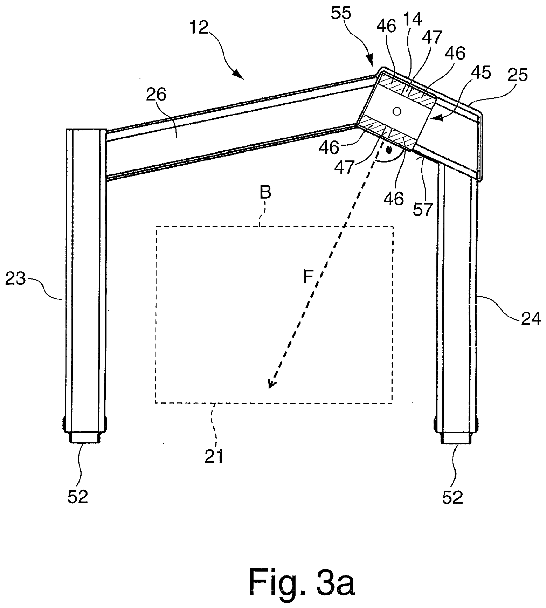

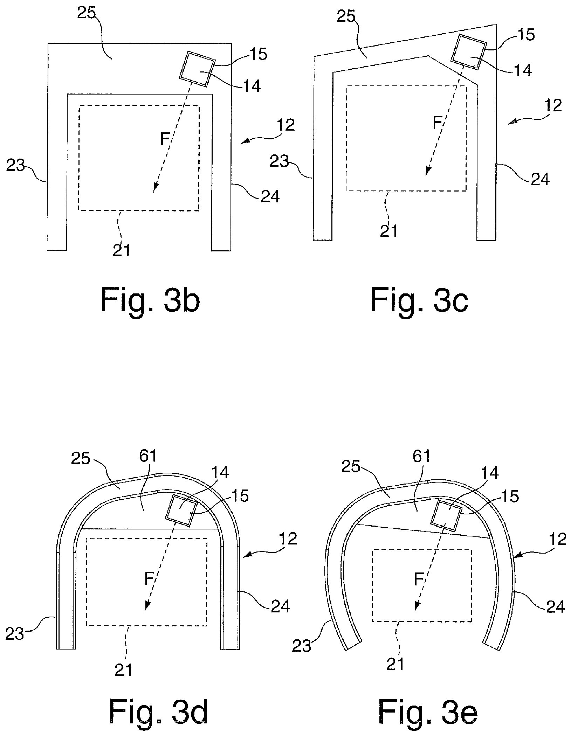

Gemäß der in Figur 2 dargestellten Ausführungsform umfasst das Grundgestell 12 neben den parallel ausgerichteten ersten und zweiten Schenkeln 23, 24 einen dritten Schenkel 25 und vierten Schenkel 26, wobei der dritte Schenkel 25 kürzer als der vierte Schenkel 26 ausgebildet ist. Diese beiden sind in einem stumpfen Winkel zueinander angeordnet. Durch die ungleichmäßige Länge des dritten und vierten Schenkels 25, 26 sowie die Anordnung in einem stumpfen Winkel wird ein Übergangsbereich 55 (Figur 3) zwischen dem dritten und vierten Schenkel 25, 26 außermittig zum Grundgestell 12 verlagert.

Das an dem Grundgestell 12 angeordnete Fahrwerk umfasst Laufrollen 52, die am vorderen freien Ende des ersten und zweiten Schenkels 23, 24 angeordnet sind sowie eine lenkbare Laufrolle 53, die an einer nur teilweise dargestellten Deichsel 54 angeordnet ist. Diese Deichsel 54 ist mit dem Grundgestell 12 verbunden und greift bevorzugt an dem dritten Schenkel 25 an. Dadurch ist die Deichsel 54 der Hubsäule 14 zugeordnet, so dass der asymmetrische Aufbau eine gute Zugänglichkeit zum mittleren Bereich des Lastaufnahmebereichs 21 ermöglicht. Bei dieser Ausführungsform liegt durch Absenken die lenkbaren Laufrollen das Grundgestell 12 im Wesentlichen auf dem Boden auf und ist gegen Verfahren gesichert, ohne dass die Laufrollen 52 eingefahren werden. Alternativ können alle Laufrollen gleichermaßen gegenüber dem Grundgestell eingefahren werden, so dass dieses vollständig auf dem Boden für eine nachfolgende Lastaufnahme aufliegt. Alternativ kann an dem Grundgestell 12 auch ein Lenkfahrwerk angeordnet sein.

In Figur 3a, welche eine Ansicht auf das Grundgestell 12 und eine Schnittansicht durch die Hubsäule 14 und den Träger 15 zeigt, geht die außermittige Anordnung der Hubsäule 14 am Grundgestell 12 hervor. Bei einer ersten Ausführungsform der Hubsäule 14 ist diese vorzugsweise im Querschnitt rechteckig oder quadratisch ausgebildet und an dem kürzeren - also dritten Schenkel 25 - angebracht, wobei eine zum Lastaufnahmebereich 21 weisende Seitenwandfläche 57 des dritten Schenkels 25 mit einem beispielsweise als Führungsfläche ausgebildeten ersten Führungselement 47 der Hubsäule 14 zur verfahrbaren Anordnung des Trägers 15 parallel zur Seitenwandfläche 57 am dritten Schenkel 55 oder sogar in einer Ebene fluchtend angeordnet ist. Die Querschnittsfläche der Hubsäule 14 entspricht bevorzugt annähernd oder gleich der Querschnittsfläche des dritten Schenkels 25, so dass diese eine vollflächige Abstützung auf dem dritten Schenkel 25 erfährt. Durch diese Anordnung und Ausrichtung der Hubsäule 14 zum dritten Schenkel 25 weist eine bei Last auf die Hubsäule 14 und den Träger 15 wirkende Kraftresultierende F in den Lastaufnahmebereich 21. Dadurch kann eine hohe Kraftaufnahme erzielt werden, wodurch trotz einer asymmetrischen Anordnung der Hubsäule zum Grundgestell diese Hebevorrichtung 11 als Einsäulen-Hebevorrichtung eingesetzt werden kann.

An dem ersten Führungselement 47 der Hubsäule 14 greift ein weiteres Führungselement 46 an, an welchem sich wiederum der als Hülse ausgebildete Träger 15 bei einer Lastaufnahme abstützt. Bevorzugt ist das Führungselement 46 als Gleit- oder Lauffläche ausgebildet. Alternativ kann neben einer Gleitlagerung auch eine Rollen- oder Wälzlagerung eingesetzt werden. Das erste und weitere Führungselement 47, 46 bilden eine Führung 45, durch welche der Träger 15 zur Hubsäule 14 auf und ab bewegbar geführt ist. Im Hinblick auf die geometrischen Ausführungsformen der Hubsäule 14 und des Trägers 15 sowie der Führungselemente 46, 47 wird vollumfänglich auf die alternativen Ausführungsformen Bezug genommen, welche in der WO2010/112200 A1 beschrieben und dargestellt sind. Dies bedeutet, dass das erste Führungselement 47 beispielsweise aus zwei in einem stumpfen Winkel zueinander angeordneten Führungsabschnitten bestehen kann, die zusammen das Führungselement 46 ergeben. Des Weitereren kann die Führung 45 alternativ durch zwei aufeinander zu weisende U-förmige Schienen ausgebildet sein, die Teil der Hubsäule sind, in denen Gleitelemente oder Wälzkörper als weiteres Führungselement 46 geführt werden, die an dem Träger 15 angeordnet sind.

Die Hubsäule 14 kann gemäß einer nicht näher dargestellten alternativen Ausführungsform auch auf dem vierten Schenkel 26 in einer außermittigen Position zum Grundgestell 12 angeordnet sein.

Eine weitere alternative und nicht näher dargestellte Ausführungsform des Grundgestells 12 umfasst zwischen den beiden parallel ausgerichteten ersten und zweiten Schenkeln 23, 24 drei weitere Schenkel, wobei jeweils ein an dem Schenkel 23, 24 angeordneter Schenkel unter einem Winkel von beispielsweise 45° zur Mitte des Grundgestells weisend angeordnet ist und der fünfte Schenkel die beiden geneigten - also den dritten und vierten - Schenkel miteinander verbindet. Bei dieser Ausführungsform kann die Hubsäule an einem der beiden geneigten Schenkel - also dem dritten und vierten Schenkel - ebenfalls außermittig angeordnet werden, wobei im mittleren Bereich des Grundgestells ein Schenkel vorgesehen ist, der rechtwinklig zum ersten und zweiten Schenkel ausgerichtet ist. Dadurch kann beispielsweise eine Deichsel an dem mittleren Schenkel ebenso wie an den geneigten Schenkeln angeordnet sein.

In Figur 3b ist eine alternative Ausführungsform zu den vorbeschriebenen Ausführungsformen des Grundgestells 12 dargestellt. Bei dieser Ausführungsform weist das Grundgestell 12 eine U-Form auf, welche durch zwei parallele Schenkel 23, 24 und einem dritten Schenkel 25 gebildet ist, der jeweils im rechten Winkel zum Schenkel 23, 24 angeordnet ist. Die Hubsäule 14 ist außermittig zum Grundgestell 12 und wiederum derart gedreht, in deren Ausrichtung auf dem dritten Schenkel 25 angeordnet, so dass die Kraftresultierende innerhalb des Lastaufnahmebereiches 21 liegt.

In Figur 3c ist eine Abwandlung zu Figur 3b dargestellt. Die beiden parallelen Schenkel 23, 24 sind wiederum durch einen dritten Schenkel 25 miteinander verbunden, wobei dieser dritte Schenkel 25 zum linken Schenkel 23 in einem stumpfen Winkel und zum rechten Schenkel 24 in einem spitzen Winkel angeordnet ist. Dadurch sind die beiden Schenkel 23, 24 unterschiedlich lang ausgebildet. In einem Eckbereich - beispielsweise zwischen dem zweiten Schenkel 24 und dritten Schenkel 25 - ist eine Hubsäule 14 wiederum derart ausgerichtet, dass die Kraftresultierende in den Lastaufnahmebereich 21 weist. Die Hubsäule 14 kann, wie dies in Figur 3c dargestellt ist, auf einer im Eckbereich des zweiten und dritten Schenkels 24, 25 ausgebildeten Plattform angeordnet sein. Ebenso kann sich die Hubsäule 14 ausschließlich auf den Schenkeln 23, 24 abstützen.

Bei den vorbeschriebenen Ausführungsformen ist es grundsätzlich auch möglich, dass die Hubsäule 14 anstelle des Schenkels 24 dem Schenkel 23 zugeordnet ist. Darüber hinaus kann abweichend zu den dargestellten parallelen Schenkeln 23, 24 auch vorgesehen sein, dass diese sich zu deren freien Enden hin aufweiten, das heißt, dass die an den freien Enden der Schenkel 23, 24 angeordneten Laufrollen einen größeren Abstand aufweisen als die Enden der Schenkel 23, 24 im hinteren Bereich, in dem die Schenkel 23, 24 mit einem den dritten Schenkel 25 oder dem dritten und vierten Schenkel 25, 26 verbunden sind.

In Figur 3d ist eine weitere alternative Ausführungsform des Grundgestells 12 in einer Ansicht von oben dargestellt. Der dritte Schenkel 25 ist dabei gekrümmt ausgebildet und kann die Kontur eines asymmetrischen Bogens aufweisen. Innerhalb des Bogens kann eine bogensegmentartige Aufnahme 61 zur Positionierung der Hubsäule 14 vorgesehen sein. Alternativ kann die Hubsäule 14 auch auf dem dritten Schenkel 25 angeordnet sein. Die asymmetrische bogenförmige Kontur des dritten Schenkels 25 dient dazu, die Hubsäule 14 außermittig und verdreht in der Ausrichtung zum Grundgestell 12 anzuordnen, damit wiederum die Kraftresultierende in dem Lastaufnahmebereich 21 liegt.

Für diese Ausführungsform gelten ebenfalls die vorbeschriebenen Alternativen hinsichtlich des parallelen Schenkels 23, 24 als auch der Positionierung der Hubsäule 14.

In Figur 3e ist eine weitere alternative Ausführungsform zu Figur 3d dargestellt. Die Schenkel 23, 24 sind jeweils gekrümmt ausgebildet, so dass das Grundgestell 12 eine Art Hufeisenform aufweist. Dabei ist wiederum eine asymmetrische Bogenkontur des dritten Schenkels 25 gewählt, um beispielsweise in diesem Bereich die Hubsäule 14 vorzugsweise auf der Aufnahme 61 aufzunehmen.

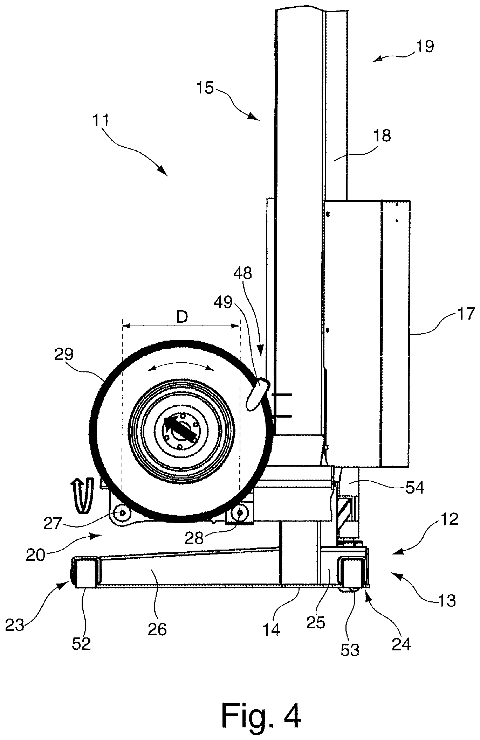

Figur 4 zeigt eine Vorderansicht der Hebevorrichtung 11 mit einem durch das Lastaufnahmemittel 20 aufgenommenen Reifen 29. Durch die als drehbar gelagerte Walze ausgebildeten Greifarme 27, 28 ist nicht nur ermöglicht, dass sich ein im Radgreifelement befindliches Rad 29 drehen lässt, um etwa das Lochbild einer Radnabe des Fahrzeugs mit demjenigen der Felge des Rades 29 in Deckungsgleichheit zu bringen, sondern es ist auch beim Verändern des Abstandes der Gabelarme 27, 28 eine Feinjustierung in der Lage des Reifens 29 ermöglicht. Durch die Veränderung des Abstandes D der Gabelarme 27, 28 - also durch Vergrößern oder Verringern des Abstandes D - kann der Achsmittelpunkt des Reifens 29 nach links oder rechts zur Vertikalen verlagert werden. Zusätzlich kann das Lastaufnahmemittel 20 auf und ab bewegt werden. Dadurch wird eine Feinpositionierung des Lochbildes der Felge des Rades 29 quer zur Hubrichtung ermöglicht, um ohne zusätzliches Verfahren der Hebevorrichtung 11 eine deckungsgleiche Positionierung des Lochbildes der Felge des Rades 29 zum Lochbild der Radnabe zu ermöglichen.

Zur Fixierung einer stehenden Position des Rades 29 auf dem Lastaufnahmemittel 20 ist eine Radhaltevorrichtung 48 vorgesehen, welche mit dessen Greiferabschnitt 49 (Figur 1) den Reifen umgreift. Dieser Greiferabschnitt 49 ist um eine Achse schwenkbar angeordnet, so dass durch eine Verdrehbewegung der U-förmige Greiferabschnitt 49 der Radhaltevorrichtung 48 von dem Rad 29 lösbar ist.

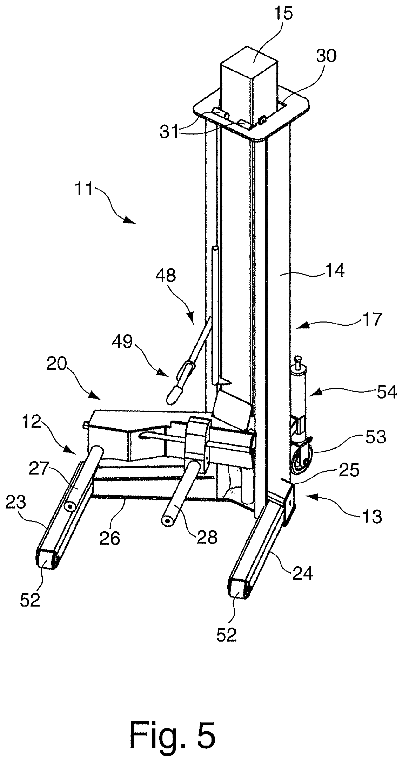

In Figur 5 ist eine alternative Ausführungsform zur Hebevorrichtung 11 gemäß Figur 1 dargestellt. Diese Ausgestaltung weicht dahingehend ab, dass der Träger 15 innerhalb der Hubsäule 14 gelagert und als geschlossenes Rohr ausgebildet ist. Dabei ist in einer oberen Stirnseite der Hubsäule 14 eine zentrische Aussparung 30 vorgesehen, durch welche der Träger 15 während seiner Hubbewegung hindurchtreten kann. Entsprechend dem Profil des Trägers 15 beziehungsweise dessen Querschnittsgeometrie ist auch die zentrische Aussparung 30 im Wesentlichen quadratisch oder rechteckig geformt. Die Führungselemente sind vorzugsweise als zwei Laufrollen 31 ausgebildet, die in einer gemeinsamen Achse liegen. Diese Ausgestaltung weist den Vorteil einer selbstständigen Zentrierung des Trägers 15 zur Hubsäule 14 auf. Im Hinblick auf die konstruktive Ausgestaltung der Hebevorrichtung 11 bezüglich der Hubsäule 14 und dem Träger 15 wird vollumfänglich auf die WO 2010/112200 A1 sowie die darin beschriebenen Ausführungsformen Bezug genommen, die auch vorstehend eingesetzt werden können.

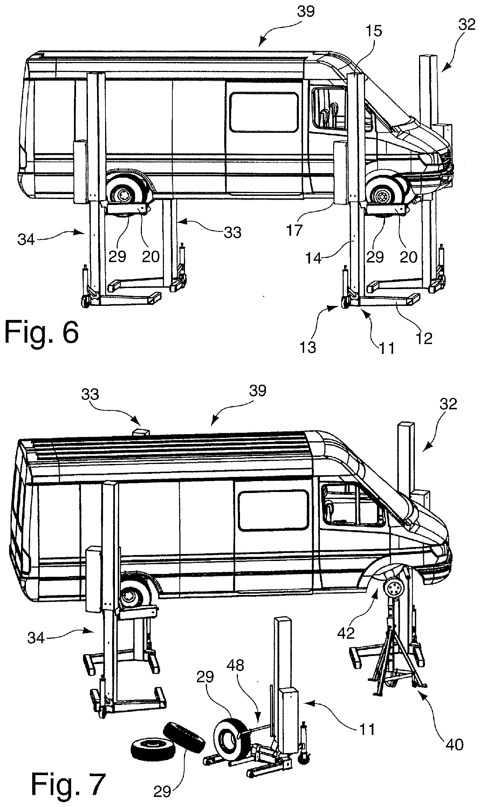

Die Figuren 6 bis 8 zeigen den Einsatz der erfindungsgemäßen Hebevorrichtung 11 als Einsäulen-Hebebühne, die zusammen eine Hebeeinrichtung oder ein Hebesystem bilden. Diese Hebeeinrichtung 11 dient zum einen zum Anheben des Fahrzeuges 39, wie dies in Figur 6 dargestellt ist, um Wartungs- und Montagearbeiten daran durchzuführen. Dabei können entsprechend der Anzahl der Achsen des Fahrzeugs Hebevorrichtungen 11 für eine Hebeeinrichtung beziehungsweise ein Hebesystem bereitgestellt und zu einem Hebesystem konfiguriert werden, wobei vorzugsweise zumindest vier Hebevorrichtungen 11 zum Heben eines Fahrzeuges 39 vorgesehen sind, so dass jeweils zwei paarweise einander zugeordnete Hebevorrichtungen 11 an einer Achse angreifen.

Über die Steuerung der Hebeeinrichtung oder einer Hebevorrichtung 11 erfolgen die Konfiguration und die Einbindung der einzelnen Hebevorrichtungen 11 in die Hebeeinrichtung. Gleichzeitig wird über eine gemeinsame Steuerung oder eine Master-Slave-Steuerung auch das Heben und Senken der einzelnen Hebevorrichtungen angesteuert und überwacht. Zum anderen können die Einsäulen-Hebevorrichtungen dieser Hebeeinrichtung auch gleichzeitig zur Radmontage beziehungsweise zum Radwechsel einsetzbar sein.

Die Durchführung einer Demontage eines Rades sowie einer Montage eines Rades mit den erfindungsgemäßen Hebevorrichtungen 11 wird beispielsweise von einem auf einem Fahrbahnbelag stehenden Fahrzeug 39 beschrieben. In einem ersten Schritt werden vorzugsweise vier solche Hebevorrichtungen 11, 32, 33, 34 mittels ihrer fahrbaren Grundgestelle 12 an die Fahrzeugräder 29, 35, 36, 37 angesetzt, so dass jedes Rad 29 auf dem entsprechenden Lastaufnahmemittel 20 der ihm jeweils zugeordneten Hebevorrichtung 11, 32, 33, 34 ruht. Die Hebevorrichtungen 11 werden paarweise jeweils einer Achse zugeordnet. Bei einem mehrachsigen Fahrzeug 39 können an jeder Achse zwei Hebevorrichtungen 11 vorgesehen sein. Ebenso können auch einzelne Achsen freihängend sein, wobei wenigstens zwei Paar Hebevorrichtungen 11 an zwei Achsen zum Heben eines Fahrzeuges vorgesehen sind.

In einem zweiten Schritt werden alle Hebevorrichtungen 11 gleichzeitig angesteuert und kontinuierlich auf Arbeitshöhe angehoben, wobei über die die Räder 29 paarweise verbindenden Achsen das gesamte Fahrzeug 39 angehoben wird. Dabei wird die Hubbewegung durch eine bevorzugt drahtlose Kommunikation der Steuereinheiten der Hebevorrichtungen 11 untereinander angesteuert und überwacht. Figur 6 zeigt das auf Arbeitshöhe angehobene Fahrzeug 39 mit den das Fahrzeug 39 tragenden Hebevorrichtungen 11, 32, 33, 34.

In einem dritten Schritt wird die Achse des auszutauschenden Rades 29 nahe ihrem dem Rad 29 zugewandten Ende auf eine geeignet positionierte Abstützvorrichtung 40 abgesetzt, um das Fahrzeug 39 in dieser Lage zu stützen und zu stabilisieren. Alternativ kann die Abstützvorrichtung 40 auch an einem naheliegenden Lastaufnahmepunkt der Karosserie angreifen.

In einem vierten Schritt wird das Rad 29 von der Radnabe der Achse gelöst, wobei etwa ein Schlagschrauber zum Entfernen der Radmuttern zum Einsatz kommen kann. Während dieses Schrittes ruht das Rad 29 weiterhin stabil auf dem Lastaufnahmemittel 20.

Aufgrund der asymmetrischen Anordnung der Hubsäule 14 beziehungsweise der außermittigen Anordnung der Hubsäule 14 zum Grundgestell 12 ist eine ungehinderte und gute Zugänglichkeit zu den Radmuttern des Rades 29 ermöglicht.

Bevor die letzte Radmutter von der Radnabe entfernt wird, wird die Radhaltevorrichtung 48 am Rad 29 positioniert. Alternativ kann dies auch erst nach der Entnahme aller Radmuttern, jedoch vor einer Absenkbewegung des Lastaufnahmemittels 20 erfolgen.

In einem fünften Schritt wird das zu Rad 29 mittels der Hebevorrichtung 11 abgesenkt, um eine Entnahme des Rades 29 im sechsten Schritt zu ermöglichen. Auf die Hebevorrichtung 11 wird ein neues Rad 41 gemäß dem siebten Schritt positioniert. Figur 7 zeigt die Gesamtanordnung in dieser Arbeitsphase.

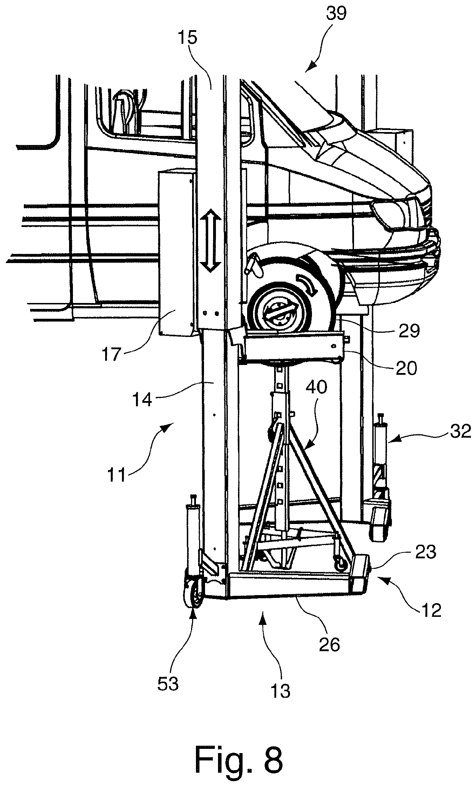

In einem achten Schritt wird im Falle eines Radwechsels ein neues Rad 41 mittels der Hebevorrichtung 11 auf Achshöhe angehoben. Für den Fall, dass das Rad 29 nur demontiert wurde, um Wartungs- und/oder Reparaturarbeiten an der Radnabe, dem Bremssystem oder dergleichen durchzuführen, kann dasselbe Rad 29 wieder mittels der Hebevorrichtung auf Achshöhe angehoben werden. In einem optionalen neunten und zehnten Schritt wird das auf dem Lastaufnahmemittel 20 ruhende Rad 29 durch Drehung desselben und gegebenenfalls einer Abstandsänderung des oder der Gabelarme 27, 28 feinpositioniert, so dass das Lochbild der Felge mit dem Lochbild der Radnabe übereinstimmt und fluchtet. Figur 8 zeigt diesen Arbeitsschritt.

In einem elften Schritt wird das Rad 29 mittels Radmuttern an der Achse 42 befestigt.

In einem zwölften Schritt wird zumindest das nunmehr an der Achse 42 befestigte Rad 29 mittels der Hebevorrichtung 11 zumindest geringfügig weiter angehoben, um in einem dreizehnten Schritt die darunter befindliche Abstützvorrichtung 40 zu entfernen. Alternativ werden die paarweise der Achse 42 zugeordneten Hebevorrichtungen 11 gemeinsam geringfügig angehoben oder sogar alle die Hebeeinrichtung bildenden Hebevorrichtungen 11 gleichzeitig angehoben, um die Abstützvorrichtung 40 zu entfernen.

In einem vierzehnten Schritt wird das Fahrzeug 39 abgesenkt, so dass sämtliche Hebevorrichtungen 11, 32, 33, 34 schließlich in einem fünfzehnten Schritt entfernt werden können und das Fahrzeug 39 wieder betriebsbereit auf dem Boden ruht.

Sofern das Fahrzeug 39 durch eine weitere Hebebühne oder ein Hebesystem angehoben wird und eine Demontage des Rades 29 erforderlich ist, wird die Hebevorrichtung 11 zu dem entsprechenden Rad 29 positioniert, so dass das Lastaufnahmemittel 20 das Rad 29 untergreift. Anschließend werden die Radmuttern gelöst, so dass das Rad 29 mittels der Hebevorrichtung 11 entnommen und abgesenkt werden kann. Anschließend kann wiederum die Montage des Rades 29 in Analogie zum vorbeschriebenen achten bis elften Schritt an der Radnabe erfolgen. Diese Abfolge der Arbeitsschritte kann dann erfolgen, sofern das demontierte Rad wieder montiert oder das demontierte Rad durch ein neues Rad ersetzt wird.

Des Weiteren kann die Hebevorrichtung 11 als Radmontage bei einer Erstausrüstung eingesetzt werden, indem beispielsweise das Fahrzeug 39 auf einem Förderband oder auf einer Bühne bereitgestellt wird und das Rad 29 an der Radnabe zu montieren ist. In einem solchen Fall wird das jeweilige Rad 39 auf der Lastaufnahmemittel 20 positioniert und gegebenenfalls mit der Radhaltevorrichtung 48 fixiert. Im Anschluss werden die vorbeschriebenen Schritte acht bis elf durchgeführt.

## Patentansprüche

1. Hebevorrichtung zum Heben von Lasten, Fahrzeugen oder dergleichen, umfassend ein mobiles Grundgestell (12), eine am Grundgestell (12) vorgesehene Hubsäule (14), einen Träger (15), wobei der Träger (15) durch eine Führung (45) an der Hubsäule (14) geführt ist, und ein an dem Träger (15) angeordnetes Lastaufnahmemittel (20), durch welches ein Lastaufnahmebereich (21) bestimmt ist, wobei das Grundgestell (12) mindestens einen ersten Schenkel (23) mit einem ersten Abstützpunkt und mindestens einen zweiten Schenkel (24) mit einem zweiten Abstützpunkt aufweist, wobei der erste Schenkel (23) und der zweite Schenkel (24) im Wesentlichen parallel ausgerichtet und mit zumindest einem weiteren Schenkel (25, 26) im Wesentlichen U-förmig verbunden sind und mindestens drei Abstützpunkte außerhalb des Lastaufnahmebereichs (21) des Lastaufnahmemittels (20) aufweist, und eine von einer Steuerung ansteuerbare Antriebseinheit, die den Träger (14) relativ zur Hubsäule (14) auf und ab bewegt, wobei die Hubsäule (14) außermittig zum Lastaufnahmebereich (21) am Grundgestell (12) angeordnet ist, **dadurch gekennzeichnet**, - dass die Hubsäule (14) gegenüber einer Längsseite des Lastaufnahmebereichs (20) gedreht angeordnet ist, - dass die im Wesentlichen U-förmige Verbindung der beiden im Wesentlichen parallelen Schenkel (23, 24) durch wenigstens zwei ungleich lange Schenkel (25, 26) gebildet ist, die in einem stumpfen Winkel zueinander angeordnet sind, und - dass die Hubsäule (14) auf dem kürzeren Schenkel (25) angeordnet ist.

2. Hebevorrichtung nach Anspruch 1, **dadurch gekennzeichnet, dass** der dritte und vierte Schenkel (25, 26) zum ersten und zweiten Schenkel (23, 24) in einem stumpfen Winkel angeordnet sind.

3. Hebevorrichtung nach Anspruch 1 **dadurch gekennzeichnet,**
**dass** die Hubsäule (14) auf dem kürzeren Schenkel (25) angeordnet ist und diese an den längeren Schenkel (26) angrenzend positioniert ist.

4. Hebevorrichtung nach einem der vorhergehenden Ansprüche, **dadurch gekennzeichnet, dass** das Lastaufnahmemittel (20) als Radgreifelement mit einem ersten Gabelarm (27) und einem zweiten Gabelarm (28) ausgebildet ist, die vorzugsweise parallel zum ersten und zweiten Schenkel (23, 24) des Grundgestells (12) ausgerichtet sind.

5. Hebevorrichtung nach Anspruch 4 **dadurch gekennzeichnet, dass** das Aufnahmemittel (20) zumindest abschnittsweise rollengelagerte oder gleitfähige Aufnahmeelemente an zumindest einem Gabelarm (27, 28) aufweist.

6. Hebevorrichtung nach Anspruch 4, **dadurch gekennzeichnet, dass** zumindest einer der beiden Gabelarme (27, 28) als drehbar gelagerte Rolle oder Walze ausgebildet ist.

7. Hebevorrichtung nach Anspruch 4 oder 5, **dadurch gekennzeichnet, dass** zumindest einer der Gabelarme (27, 28) relativ zum anderen Gabelarm (27, 28) im Abstand einstellbar angeordnet sind.

8. Hebevorrichtung nach einem der vorhergehenden Ansprüche, **dadurch gekennzeichnet, dass** an der Hubsäule (14), dem Träger (15) oder dem Grundgestell (12) eine Radhaltevorrichtung (48) vorgesehen ist, die vorzugsweise einen U-förmigen Greifabschnitt (49) aufweist.

9. Hebevorrichtung nach einem der vorhergehenden Ansprüche, **dadurch gekennzeichnet, dass** zumindest eine lenkbare Laufrolle (53) oder ein Lenkfahrwerk dem Lastaufnahmebereich (21) gegenüberliegend der Hubsäule (14) und dem Träger (15) zugeordnet ist.

10. Verfahren zu Montage und Demontage Wechseln eines Rades (29) auf einer Achse (42) eines Fahrzeugs (39), umfassend die folgenden Schritte bei einem sich auf dem Boden befindenden Fahrzeug (39):
a) Ansetzen von wenigstens zwei einander zugeordneten Hebevorrichtungen (11) gemäß einem der Ansprüche 1 bis 9 an dem Rad (29) einer Achse,b) Anheben der zumindest einen Achse (42) des Fahrzeugs (39) durch die Hebevorrichtungen (11),
c) zumindest teilweises Absetzen des Fahrzeugs (39) oder der Achse (42) des Fahrzeugs (39) auf mindestens eine Abstützvorrichtung (40),
d) Lösen des Rades (29) von einer Radnabe der Achse (42),
e) Absenken des Rades (29) durch die Hebevorrichtung (11),
f) Entnahme des Rades (29) aus der Hebevorrichtung (11),
g) Aufnahme desselben oder eines weiteren Rades (29) durch die Hebevorrichtung (11),
h) Anheben des Rades (29) auf Höhe der Achse (42) durch die Hebevorrichtung (11),
i) Befestigen einer Felge des Rades (29) an der Radnabe der Achse (42),
j) weiteres Anheben zumindest des montierten Rades (29) mitsamt der Achse (42) durch die Hebevorrichtung (11),
k) Entfernen der Abstützvorrichtung (40),
l) Absenken des Fahrzeuges (39) auf Bodenhöhe und
m) Entfernen der Hebevorrichtungen (11),
oder umfassend die folgenden Schritte bei einem durch eine weitere Hebeeinrichtung angehobenen Fahrzeug (39), welche an einer Karosserie des Fahrzeugs (39) angreift:
n) Ansetzen der Hebevorrichtung (11) gemäß einem der Ansprüche 1 bis 10 an einem Rad (29),
o) Durchführung der vorstehenden Schritte d) bis i)
p) Entfernen der Hebevorrichtung (11).

11. Verfahren nach Anspruch 10, **gekennzeichnet durch** eine Feinjustierung des Rades (29) zur Ausrichtung eines Lochbildes der Felge auf das Lochbild der Radnabe **durch** mindestens einen der folgenden Zwischenschritte vor dem Befestigen des Rades (29) an der Achse (42):
a) Drehen des Rades (29), welches stehend auf dem Lastaufnahmemittel (20) angeordnet ist und/oder
b) Verschieben des zumindest einen Gabelarms (27) des Lastaufnahmemittels (20) relativ zum weiteren Gabelarm (28).

12. Verwendung der Hebevorrichtung (11) nach einem der Ansprüche 1 bis 9 als Radmontagewagen.

## Claims

1. Lifting device for lifting loads, vehicles or similar, comprising a mobile base frame (12), a lifting column (14) provided on the base frame (12), a support (15), wherein the support (15) is guided on the lifting column (14) by a guide (45), and a load receiving means (20) arranged on the support (15), with which a load receiving region (21) is determined, wherein the base frame (12) has at least one first arm (23) having a first support point and at least one second arm (24) having a second support point, and the first arm (23) and the second arm (24) are aligned substantially in parallel and are connected to at least one further arm (25, 26) in a substantially U-shaped manner, and has at least three support points outside the load receiving region (21) of the load receiving means (20), and a drive unit that is able to be controlled by a control, which moves the support (14) back and forth relative to the lifting column (14), wherein the lifting column (14) is arranged eccentrically with respect to the load receiving region (21) on the base frame (12), **characterised in**
- **that** the lifting column (14) is arranged rotated with respect to a longitudinal side of the load receiving region (20),
- **that** the substantially U-shaped connection of the two substantially parallel arms (23, 24) is formed by at least two arms (25, 26) of unequal length, which are arranged at an obtuse angle to each other and
- **that** the lifting column (14) is arranged on the shorter arm (25).

2. Lifting device according to claim 1, **characterised in that**, the third and fourth arms (25, 26) are arranged at an obtuse angle to the first and second arms (23, 24).

3. Lifting device according to claim 1, **characterised in that** the lifting column (14) is arranged on the shorter arm (25) in such a way that this is positioned adjacently to the longer arms (26).

4. Lifting device according to one of the preceding claims, **characterised in that** the load receiving means (20) is formed as a wheel gripping element having a first fork arm (27) and a second fork arm (28), which are preferably aligned in parallel to the first and second arms (23, 24) of the base frame (12).

5. Lifting device according to claim 4, **characterised in that** the load receiving means (20) has receiving elements which are mounted on rollers at least in sections or are able to slide on at least one fork arm (27, 28).

6. Lifting device according to claim 4, **characterised in that** at least one of the two fork arms (27, 28) is formed as a rotatably mounted roller or drum.

7. Lifting device according to claim 4 or 5, **characterised in that** at least one of the fork arms (27, 28) is arranged adjustably at a distance to the other fork arm (27, 28).

8. Lifting device according to one of the preceding claims, **characterised in that** a wheel retaining device (48) is provided on the lifting column (14), the support (15) or the base frame (12), which has a preferably U-shaped gripping section (49).

9. Lifting device according to one of the preceding claims, **characterised in that** at least one steerable roller (53) or a steering chassis is allocated to the load receiving region (21) opposite the lifting column (14) and the support (15).

10. Method for installing and uninstalling replacements of a wheel (29) on an axle (42) of a vehicle (39), comprising the following steps for a vehicle (39) located on the ground:
a) setting of at least two lifting devices (11) which are allocated to each other according to one of claims 1 to 9 on the wheel (29) of an axle,
b) lifting of the at least one axle (42) of the vehicle (39) by the lifting devices (11),
c) at least partial depositing of the vehicle (39) or the axle (42) of the vehicle (39) on at least on support device (40),
d) release of the wheel (29) from a wheel hub of the axle (42),
e) lowering of the wheel (29) by the lifting device (11),
f) removal of the wheel (29) from the lifting device (11),
g) receiving of the same or a further wheel (29) by the lifting device (11),
h) lifting of the wheel (29) to the height of the axle (42) by the lifting device (11),
i) fixing of a wheel rim of the wheel (29) to the wheel hub of the axle (42),
j) further lifting at least of the mounted wheel (29) together with the axle (42) by the lifting device (11),
k) removal of the support device (40),
l) lowering of the vehicle (39) to ground height and
m) removal of the lifting devices (11),
or comprising the following steps for a vehicle (39) lifted by a further lifting device, which engages with a body of the vehicle (39):
n) setting of the lifting device (11) according to one of claims 1 to 14 on the wheel (29),
o) implementation of the above steps d) to i)
p) removal of the lifting device (11).

11. Method according to claim 10, **characterised by** a precise adjustment of the wheel (29) for the alignment of a hole pattern of the wheel rim to the hole pattern of the wheel hub by at least one of the following intermediate steps, before fixing the wheel (29) to the axle (42):
a) rotation of the wheel (29), which is arranged standing on the load receiving means (20) and/or
b) displacement of the at least one fork arm (27) of the load receiving means (20) relative to the further fork arm (28).

12. Use of the lifting device (11) according to one of claims 1 to 9 as a wheel mounting trolley.

## Revendications

1. Dispositif de levage destiné à soulever des charges, des véhicules ou objets similaires, lequel comprend un socle mobile (12), une colonne de levage (14) prévue sur le socle (12), un élément porteur (15), l'élément porteur (15) étant guidé par un guide (45) situé sur la colonne de levage (14), et un dispositif porte-charge (20) qui est disposé sur ledit élément porteur (15) et par lequel est déterminé une zone de réception de charge (21), le socle (12) présentant au moins une première branche (23) avec un premier point d'appui et au moins une deuxième branche (24) avec un deuxième point d'appui, la première branche (23) et la deuxième branche (24) étant orientées essentiellement de manière parallèle l'une à l'autre et étant reliées, essentiellement en forme de U, à au moins une autre branche (25, 26), et présentant au moins trois points d'appui à l'extérieur de la zone de réception de charge (21) du dispositif porte-charge (20), et une unité d'entraînement qui peut être activée par une commande et fait monter et descendre l'élément porteur (14) par rapport à la colonne de levage (14), la colonne de levage (14) étant disposée sur le socle (12) de manière excentrée par rapport à la zone de réception de charge (21), **caractérisé en ce que** - la colonne de levage (14) est disposée de manière à être décalée angulairement par rapport à un côté longitudinal de la zone de réception de charge (20), - la liaison essentiellement en forme de U des deux branches (23, 24) essentiellement parallèles est formée par au moins deux branches (25, 26) de longueurs inégales qui sont disposées entre elles selon un angle obtus, et - la colonne de levage (14) est disposée sur la branche (25) qui est plus courte.

2. Dispositif de levage selon la revendication 1, **caractérisé en ce que** la troisième et la quatrième branche (25, 26) sont disposées selon un angle obtus par rapport à la première et à la deuxième branche (23, 24).

3. Dispositif de levage selon la revendication 1, **caractérisé en ce que** la colonne de levage (14) est disposée sur la branche (25) qui est plus courte et qu'elle est positionnée de manière contiguë à la branche (26) qui est plus longue.

4. Dispositif de levage selon l'une quelconque des revendications précédentes, **caractérisé en ce que** le dispositif porte-charge (20) est réalisé sous forme d'élément de prise sous roue constitué d'un premier bras de fourche (27) et d'un deuxième bras de fourche (28), lesquels sont orientés de préférence de manière parallèle à la première et à la deuxième branche (23, 24) du socle (12).

5. Dispositif de levage selon la revendication 4, **caractérisé en ce que** le dispositif porte-charge (20) présente, sur au moins un bras de fourche (27, 28), des éléments de réception montés au moins partiellement sur roulement ou capables de glisser.

6. Dispositif de levage selon la revendication 4, **caractérisé en ce qu'**au moins un des deux bras de fourche (27, 28) est réalisé en tant que galet ou rouleau monté de manière à pouvoir tourner.

7. Dispositif de levage selon la revendication 4 ou 5, **caractérisé en ce qu'**au moins un des bras de fourche (27, 28) est disposé par rapport à l'autre bras de fourche (27, 28) selon une distance réglable.

8. Dispositif de levage selon l'une quelconque des revendications précédentes, **caractérisé en ce que** sur la colonne de levage (14), l'élément porteur (15) ou le socle (12) est prévu un dispositif de maintien de roue (48) qui présente de préférence une partie de prise (49) en forme de U.

9. Dispositif de levage selon l'une quelconque des revendications précédentes, **caractérisé en ce qu'**au moins un galet de roulement orientable (53) ou un chariot orientable est affecté à la colonne de levage (14) et à l'élément porteur (15) à l'opposé de la zone de réception de charge (21).

10. Procédé destiné au montage et démontage, changement d'une roue (29) sur un axe (42) d'un véhicule (39), lequel comprend les étapes suivantes dans le cas d'un véhicule (39) se trouvant au sol :
a) mettre en place au moins deux dispositifs de levage (11) selon l'une quelconque des revendications 1 à 9, lesquels sont affectés l'un à l'autre, sur la roue (29) d'un axe,
b) soulever ledit au moins un axe (42) du véhicule (39) à l'aide desdits dispositifs de levage (11),
c) faire reposer au moins partiellement le véhicule (39) ou l'axe (42) du véhicule (39) sur au moins un dispositif de support (40),
d) détacher la roue (29) d'un moyeu de roue de l'axe (42),
e) abaisser la roue (29) à l'aide du dispositif de levage (11),
f) retirer la roue (29) du dispositif de levage (11),
g) réception de la même roue ou d'une autre roue (29) par le dispositif de levage (11),
h) soulever la roue (29) à la hauteur de l'axe (42) à l'aide du dispositif de levage (11),
i) fixer une jante de la roue (29) sur le moyeu de l'axe (42),
j) soulever un peu plus haut au moins la roue (29) une fois montée, y compris l'axe (42), à l'aide du dispositif de levage (11),
k) enlever le dispositif de support (40),
l) abaisser le véhicule (39) à hauteur de sol et
m) enlever les dispositifs de levage (11),
ou lequel procédé comprend les étapes suivantes dans le cas d'un véhicule (39) soulevé par un autre dispositif de levage qui prend appui contre une carrosserie du véhicule (39) :
n) mettre en place le dispositif de levage (11) selon l'une quelconque des revendications 1 à 10 sur une roue (29),
o) exécuter les étapes d) à i) ci-avant,
p) enlever le dispositif de levage (11).

11. Procédé selon la revendication 10, **caractérisé par** un ajustement de précision de la roue (29) afin de mettre en alignement les trous de la jante avec les trous du moyeu de roue, et ce conformément à au moins une des étapes intermédiaires suivantes effectuées avant la fixation de la roue (29) sur l'axe (42) :
a) faire tourner la roue (29) qui est disposée, debout, sur le dispositif porte-charge (20) et/ou
b) déplacer ledit au moins un bras de fourche (27) du dispositif porte-charge (20) par rapport à l'autre bras de fourche (28).

12. Utilisation du dispositif de levage (11) selon l'une quelconque des revendications 1 à 9 en tant que chariot de montage de roues.
